Europäisches Patentamt

European Patent Office

Office européen des brevets

(11) Veröffentlichungsnummer: **0 272 205 B1**

# (12) EUROPÄISCHE PATENTSCHRIFT

(45) Veröffentlichungstag der Patentschrift: **29.01.92**

(21) Anmeldenummer: **87810641.8**

(22) Anmeldetag: **06.11.87**

(51) Int. Cl.5: **B25J 15/00**, B25J 9/10, B25J 18/00

(54) **Werkzeug für Roboter und Verwendung des Werkzeugs.**

(30) Priorität: **28.11.86 CH 4756/86**

(43) Veröffentlichungstag der Anmeldung:
**22.06.88 Patentblatt 88/25**

(45) Bekanntmachung des Hinweises auf die
Patenterteilung:
**29.01.92 Patentblatt 92/05**

(84) Benannte Vertragsstaaten:
**AT CH DE FR LI**

(56) Entgegenhaltungen:
**EP-A- 0 179 012      EP-A- 0 187 871
DE-A- 2 723 284      DE-A- 2 842 482
DE-A- 3 329 888      FR-A- 1 278 832
FR-A- 2 424 797      FR-A- 2 564 358
US-A- 3 760 491      US-A- 4 205 791**

(73) Patentinhaber: **GEBRÜDER SULZER AKTIENGE-
SELLSCHAFT
Zürcherstrasse 9
CH-8401 Winterthur(CH)**

(72) Erfinder: **Servis, Wilhelm
Gutstrasse 51
CH-8400 Winterthur(CH)**

## Beschreibung

Die vorliegende Erfindung bezieht sich auf ein Werkzeug für Roboter nach dem Oberbegriff von Anspruch 1 sowie die Verwendung des Werkzeugs.

Derartige Werkzeuge dienen zum Ergreifen, Halten, Bewegen usw. von Werkstücken durch Roboter und werden vom Manipulator oder Arm des Roboters getragen und mitbewegt. Wenn von den Werkzeugen grössere Leistungen zu erbringen sind, wenn grössere Kräfte ausgeübt werden müssen und wenn mit höherer Positionierungsgenauigkeit gearbeitet werden soll, führt dies zu aufwendigen und schweren Konstruktionen, die ein hohes Eigengewicht aufweisen. Roboterarme können nur begrenzte Nutzlasten tragen und handhaben. Das Werkzeug sitzt auf dem Roboterarm und bestimmt somit die Grösse der für das Werkstück freien Nutzlast wesentlich mit.

Es ist zudem wünschenswert, ein bestimmtes Werkzeug für verschiedene Aufgaben und Arbeiten einzusetzen, wobei im Einzelfall vor allem Bewegungsabläufe der Arbeitsvorrichtung z.B. eines Greifers und des Roboterarms neu festgelegt werden sollen. Mechanische Anpassungen des Werkzeugs an die neue Aufgabe sollten kurzzeitig ohne grossen Aufwand und praktisch ohne Verändern der Leistungsdaten möglich sein.

Bei bekannten Werkzeugen sind - wenn überhaupt - nur die Arbeitsvorrichtungen, beispielsweise die Greifer austauschbar und damit für das Fassen von Werkstücken verschiedener Form anpassbar. Ein Umbau der Hebelmechanik ist kurzfristig und einfach nicht vorgesehen und praktisch nicht möglich. Für verschiedene Aufgaben werden deshalb verschiedene Werkzeuge eingesetzt. Dadurch, dass die Hebelkonstruktion des Werkzeugs als kompakte Einheit ausgebildet ist, die auf eine bestimmte maximale Leistung ausgelegt ist, kann sie eine Masse aufweisen, welche die für die zu bearbeitenden Werkstücke verbleibende, freie Nutzlast stark beschränken.

Aus EP 0 187 871 ist ein Roboter bekannt, dessen Unterarm zwischen Handgelenk und Ellbogeneinheit auswechselbar ist, wodurch die Reichweiten des Roboterarms den jeweiligen Erfordernissen angepasst werden können. Die Bewegungen werden mit konzentrisch ineinanderliegend angeordneten Rohren von der Ellbogeneinheit auf das Handgelenk übertragen.

Werkzeuge mit pneumatischem Antrieb sind zudem relativ stark wärmeempfindlich. Kostengünstige, handelsübliche Pneumatikdruckzylinder sind in der Regel nur für Betriebstemperaturen bis im Bereich von 80 bis 100°C ausgelegt. Für Roboterwerkzeuge, die in höheren Temperaturbereichen eingesetzt werden, sind besondere Wärmeschutzmassnahmen vorzusehen und/oder Sonderkonstruktionen von besonders temperatur- und wärmeempfindlichen Druckzylinder zu verwenden. Diese Massnahmen, wie beispielsweise Wärmeschilder, vermindern wiederum die freie Nutzlast des Roboters.

Eine Aufgabe der Erfindung besteht darin, ein Werkzeug für einen Roboter zu schaffen, das bei grosser Leistung und hoher Präzision ein geringes Gewicht aufweist und somit eine möglichst grosse freie Nutzlast für das zu bearbeitende und zu handhabende Werkstück erreicht. Eine weitere Aufgabe der Erfindung ist es, ein Werkzeug für einen Roboter zu schaffen, dessen Konstruktion ein einfaches Auswechseln und Ersetzen einzelner Teile für neue Anwendungen ermöglicht. Das Werkzeug soll zudem in der Reinraumtechnik eingesetzt werden können. Und weiter ist ein Werkzeug für einen Roboter zu schaffen, das auch bei höheren Umgebungstemperaturen und insbesondere im Wärmestrahlungsbereich von Körpern, die eine Temperatur im Bereich 1000°C und höher aufweisen noch einwandfrei arbeiten.

Erfindungsgemäss ist ein derartiges Werkzeug für einen Roboter durch die Merkmale im Kennzeichen von Anspruch 1 gekennzeichnet. Die abhängigen Ansprüche beziehen sich auf besonders vorteilhafte Ausführungsformen der erfinderischen Lösung.

Durch den Aufbau des Werkzeugs mit konstruktiv klar abgegrenztem Antriebsteil, Arbeitsteil mit z.B. dem Greifer und dem dazwischen angeordneten Verbindungsteil wird die Anpassung des Werkzeugs an verschiedene Aufgaben besonders einfach, ohne dass die Leistung des Werkzeugs merklich beeinträchtigt wird. Die auf der Innenwand des Rohrkörpers und auf dem Lagerbolzen abgestützten Verbindungsteile, sind bei gewünschter Veränderung der Reichweite des Roboters als ganzes oder für sich einfach austauschbar und die übertragbare Leistung, aber auch die Präzision des Werkzeugs, bleiben dabei weitgehend unverändert erhalten. Bei Fluidlagerung der drehbaren Verbindungsteile auf der Innenwand des Rohrkörpers - einer besonders vorteilhaften Lösung - treten nur minimale Reibungskräfte auf und zusätzlich kann der Fluidstrom die Kühlung des Werkzeugs übernehmen.

Der Antrieb des Werkzeugs kann so ausgeführt sein, dass der eigentliche Motor nicht nutzlastwirksam ist, also ausserhalb des Werkzeugs und nicht auf dem Roboterarm angeordnet ist; und beispielsweise kann hierbei ein Druckzugkabel zum linear oder drehbar ausgeführten Antriebsteil des Werkzeugs geführt sein. In Fällen, wo die für das Werstück verfügbare freie Nutzlast bei hoher Leistung möglichst gross sein muss, bietet diese Lösung besondere Vorteile, indem das Verhältnis von Leistung zu Eigengewicht des Werkzeugs sehr günstig ist. Verschiedene, auswechselbare Antriebsteile, wie etwa kulissenartige Schieber mit Nockenführungen können wiederum die Anpassung des Werkzeugs an verschiedene Aufgaben erleichtern. Es ist aber auch denkbar, dass ein Werkzeug nach der Erfindung beispielsweise im Antriebsteil selbst Fluidantriebszylinder aufweist.

Im folgenden wird die Erfindung anhand von Ausführungsbeispielen, mit Greifern als Arbeitsteilen, näher erläutert. Es zeigen:

Fig. 1 in perspektivischer Darstellung ein erfindungsgemässes Werkzeug mit Zahnstangenantrieb und Luftkühlung für einen Roboter,

Fig. 2 ein erfindungsgemässes Werkzeug mit auf dem Innern eines Rohrkörpers luftgelagerten Verbindungsteilen, zum Teil in der Seitenansicht und zum Teil im Schnitt,

Fig. 3 eine schematische Ansicht nach III - III von Fig. 2,

Fig. 4 eine schematische Ansicht nach IV - IV von Fig. 2.

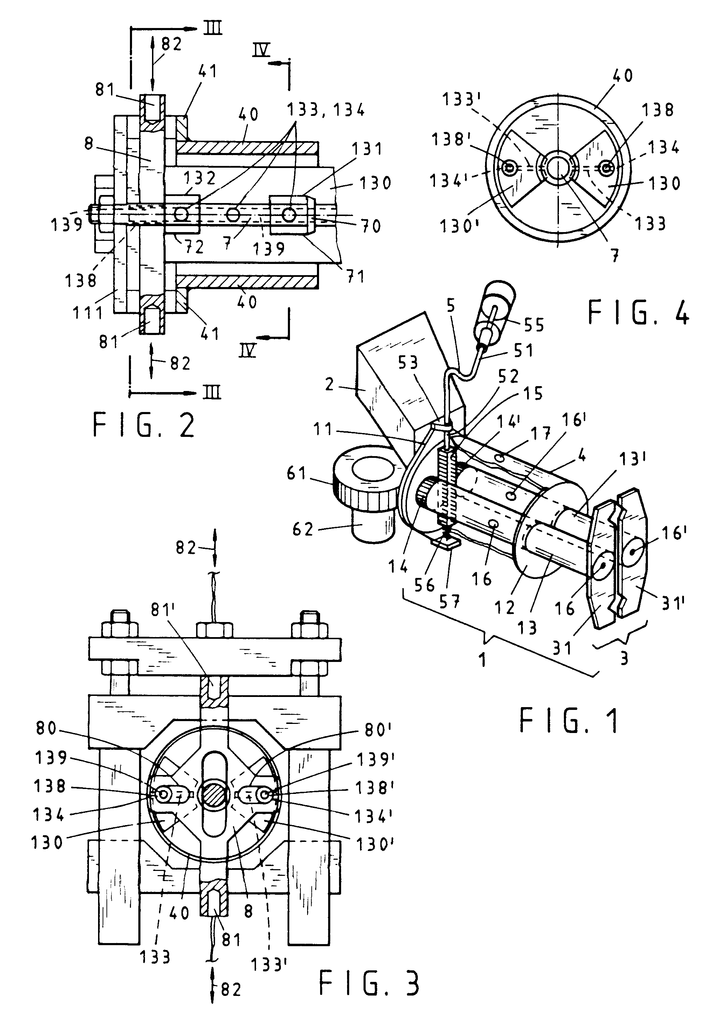

Das in Fig. 1 in Parallelperspektive gezeigte Werkzeug 1 zeigt eine Tragplatte 11, die mit dem Roboterarm 2 verschraubt oder sonstwie verbunden ist. Die beiden Finger 31, 31' des Greifers 3 sind am Ende der beiden in der Tragplatte 11 und in der Frontplatte 12 des Rohrkörpers 4 drehbar gelagerten Wellen 13, 13' befestigt. Die beiden Wellen 13,13' weisen auf der Antriebsseite je eine Verzahnung 14 bzw. 14' auf. Die Verzahnung 14, 14' kann direkt den Wellen 13, 13' angearbeitet, oder beispielsweise ein auf die Welle aufgezogener Zahnkranz, oder ein mit der Welle verbundenes Zahnrad sein.

Die Greifbewegung der Finger 31, 31' des Greifers 3 wird durch einfaches Drehen der Wellen 13, 13' erzeugt. Eine Zahnstange 15 mit beidseitiger Zähnung greift in die Verzahnungen 14, 14' der Wellen 13, 13' ein und die linearen Bewegungen der Zahnstange 15 bewirken gegenläufige Drehbewegungen der Wellen 13, 13' und damit die Greifbewegung des Greifers 3. Der lineare Antrieb der Zahnstange 15, erfolgt beispielsweise über ein Druckzugkabel 5, dessen Mantel 51 in einer Oeffnung des Winkelstücks 53 der Trägerplatte 11 endet. Das Innenkabel 52 des Druckzugkabels 5 ist mit der Zahnstange 15 fest verbunden. Das Werkzeug kann auch so ausgeführt sein, dass nur einer der Greifer 31, 31' mit Verbindungsteil 13 bzw. 13' drehbar ist und der zweite Greifer feststehend montiert ist.

Ein Pneumatik- oder Hydraulik-Zylinderkolben 55 ist mit dem anderen Ende des Innenkabels 52 fest verbunden, und das andere Ende des Mantels 51 ist vorzugsweise mit dem Zylinder verschraubt.

Im gezeigten Beispiel unterstützt eine Zugfeder 56, die auf der einen Seite am Winkel 57 der Trägerplatte 11 und mit dem anderen Ende an der Zahnstange 15 befestigt ist, die Oeffnungsbewegungen des Greifers 3.

Diese Konstruktion erlaubt in gewissen Anwendungen, einen einfach wirkenden Druckzylinder 55 mit einem einfachen Bowdenzug zu verwenden. Es ist aber auch denkbar, anstelle der Feder ein zweites Druckzugkabel oder ein zweiter Bowdenzug mit Druckzylinderantrieb zu verwenden. Die Verwendung eines beidseitig wirkenden Druckzylinders mit Druckzugkabel ist aber in vielen Anwendungsfällen genügend.

Der Druckzylinder kann auf dem Roboterarm 2 befestigt oder irgendwo im Arbeitsbereich des Roboterarms 2 angebracht sein. Bei der zweiten Montageart, ist die für das Werkstück freie Nutzlast des Roboters höher.

Es ist auch denkbar, im kompakter Bauweise die Zahnstange 15 direkt mit der Kolbenstange eines Druckzylinders zu verbinden und anzutreiben.

Bei der Verwendung des Werkzeugs im Bereich starker Wärmestrahlung können bekannte Strahlungsschutzmassnahmen, wie z.B. Wärmeschilder vorgesehen sein oder einzelne Teile wie die Frontplatte 12 sind zusätzlich als Wärmeschutzschild gestaltet. Diese passiven Schutzmassnahmen genügen aber nicht mehr, wenn etwa der Greifer 3 heisse Teile wie z.B. Schmiedeteile handhaben soll. Für die Kühlung des Werkzeugs und insbesondere des Greifers 3, der Wellen 13, 13' und des Rohrkörpers 4 sind in den Wellen 13, 13' Kanäle vorhanden, von denen nur die Austrittsöffnungen 16, 16' gezeigt sind und durch die im gezeigten Beispiel Luft von Ventilator 61, der mit dem Motor 62 angetrieben wird, geblasen wird. In einer einfachen Ausführung sind die Wellen 16, 16' als Hohlwellen ausgeführt und der freie, auf die hintere Oeffnung der Wellen gerichtete Luftstrom des Ventilators 61 bewirkt in den Hohlwellen eine Kühlluftströmung, wobei die in den Rohrkörper 4 strömende Luft auch den Rohrkörper 4 kühlt und durch die Oeffnung 17 im Rohr ausströmt.

Auch die Finger 31, 31' des Greifers können mit Kühlmittelkanälen versehen sein, das diesen über Bohrungen in den Wellen 13, 13' zugeführt wird. Die Kühlung kann selbstverständlich auch mit einem anderen Kühlgas als Luft oder mit einer Kühlflüssigkeit erfolgen.

Die Kanäle brauchen aber nicht nur Kühlfunktionen zu haben. So können die Kanäle auch als Absaugkanäle für störende und schädliche Stoffe dienen, oder das Werkzeug kann gegen den Einfluss beispielsweise aggressiver Chemikalien im Arbeitsfeld des Werkzeugs durch einen gasförmigen oder flüssigen Schutzmittelstrom geschützt werden. Bei einer Ausführung des Werkzeugs für die Verwendung in Reinmräumen besteht die Möglichkeit, in der öffnung 17 beispielsweise einen Anschluss für eine Absaugvorrichtung anzubringen und austretendes Schutzmittel direkt wieder abzusaugen. Der Rohrkörper kann bei dieser Konstruktion z.B. auch die Form eines Rechteckzylinders, eines Kegel-oder Pyramidensstumpfes haben, um spezifischen Anforderungen an die Belastbarkeit zu genügen.

Beim in Fig. 2, 3 und 4 in Schnitten gezeigten Werkzeug haben die Verbindungsteile 130, 130′ zwischen Antrieb und Greifer, der nicht gezeichnet ist, aber wie in Fig. 1 ausgebildet sein kann, die Form von Kreiszylindersegmenten, des durch den Rohrkörper 40 bestimmten Innenraums. Die um das Zentrum des Rohrkörpers 40 drehbaren Verbindungsteile 130, 130′ sind aussen auf der Innenwand des Rohrkörpers 40 und innen auf dem Lagerbolzen 7 radial gelagert. Die axiale Lagerung der Verbindungsteile ist mit den Lagerbüchsen 71, 72 und dem Kopf 70 des Lagerbolzens 7, die in den Nuten 131, 132 der Verbindungsteile 130, 130′ liegen, sichergestellt. Der Lagerbolzen 7 ist an der Trägerplatte 111 befestigt. In die Steuernuten 80, 80′ der Steuerscheibe 8 greifen die Zapfen 138 bzw. 138′ der Verbindungsteile 130 bzw. 130′ ein. Die gegensinnige Drehbewegung der Verbindungsteile 130, 130′ wird durch Verschieben der kreuzförmigen Steuerscheibe 8 in der durch die Pfeile 82 angedeuteten Richtung zeugt.

In der gezeigten Ausführung ist die Steuerscheibe 8 das Stellglied für die Greifer, dessen Antrieb gleich oder ähnlich wie in Fig. 1 gezeigt, ausgeführt sein kann. Die lineare Bewegung der kreuzförmigen Steuerscheibe 8 in Richtung der Pfeile 82, (FIG. 2, 3), beispielsweise mit Hilfe von Druckzugkabeln oder Bowdenzügen, die in den Kupplungsteilen 81, 81′ der Steuerscheibe 8 mit dieser verschraubt sind, wird in eine gegenläufige Drehbewegung der beiden Verbindungsteile 130, 130′ umgesetzt. Das Druckzugkabel könnte auch direkt zu den Zapfen geführt sein.

Die Zapfen 138, 138′ sind hier als Hohlzapfen mit den Kanälen 139, 139′ ausgeführt, über welche das Kühlmedium für das Werkzeug und insbesondere die Verbindungsteile 130, 130′ zugeführt wird. Kühlluft wird beispielsweise von einer hier nicht gezeigten Pumpe oder einem Kompressor über Schläuche direkt zu den Zapfen 138, 138′ und in die Kanäle 139, 139′ geführt.

Im vorliegenden Beispiel wird das Kühlmedium z.B. Luft auch zur radialen Lagerung der beiden Verbindungsteile 130, 130′ verwendet, indem die Luft durch hier nur schematisch angedeutete radiale Kanälke 133, 134, 133′, 134′in die Spalträume zwischen den Verbindungsteilen einerseits und Lagerbolzen 7 bzw. Rohrkörper 40 anderseits geführt wird. Damit ergibt sich für die Verbindungsteile 130, 130′ eine sehr einfache und reibungsarme Lagerung die es erlaubt, die Antriebsleistung praktisch verlustlos auf den Greifer zu übertragen. Die radiale Lagerung könnte selbstverständlich auch dadurch erreicht werden, dass das Medium über hier nicht gezeigte Kanäle im Rohrkörper 40 zugeführt würde.

In einer Ausführung für Reinräume ist es denkbar, mit einer Saugeinrichtung, die sich irgenwo ausserhalb des Greiferwerkzeugs befinden kann, ständig Gas aus der Atmosphäre des Reinraumes ins Innere des Rohrkörpers zu saugen, womit verhindert werden kann, dass der Reinraum beispielsweise durch Lager- oder Kühlmedium oder von Werkzeug stammende seiner Schmierung stammende Partikel verunreinigt wird.

Durch die einfache Konstruktion ist es auch möglich, durch den Austausch von im wesentlichen den Verbindungsteilen 130, 131 und dem Rohrkörper 4 mit Flansch 41 und möglicherweise noch den Lagerbolzen 7, ein Werkzeug verschiedenen Anforderungen an Reichweite, Leistung und Geometrie anzupassen.

Obschon die Beispiele Werkzeuge mit Greifern als Arbeitsteil beschrieben, soll die Erfindung nicht auf diese Ausführung beschränkt sein. Die Erfindung eignet sich für Werkzeuge mit verschiedensten Arbeitsvorrichtungen. Werkzeuge nach der Erfindung sind natürlich auch geeignet zur Verwendung in Umgebungen, wo keine besondere Kühlung durch ein Kühlmedium erforderlich ist.

**Patentansprüche**

1. Werkzeug für Roboter, mit einer Arbeitsvorrichtung und einem Antrieb für die Arbeitsvorrichtung und mindestens einem dazwischen angeordneten Verbindungsteil (130) für die Uebertragung von Bewegung, Kraft und Leistung auf die Arbeitsvorrichtung, der in einem Rohrkörper (40) um dessen Längsachse drehbar angeordnet ist, dadurch gekennzeichnet, dass mindestens der eine Verbindungsteil (130) angenähert die Form eines Segmentes des vom Rohrkörper (40) begrenzten Zylinders hat, und dass in der Achse des Rohrkörpers (40) ein Lagerbolzen (7) angeordnet ist, wobei der Verbindungsteil (130, 130') aussen auf der Rohrinnenwand, sowie innen auf dem Lagerbolzen (7), um die Achse des Rohrkörpers (40) drehbar gelagert ist.

2. Werkzeug nach Anspruch 1, dadurch gekennzeichnet, dass zwei drehbare Verbindungsteile (130, 130') im Rohrkörper (40), um dessen Achse drehbar, angeordnet sind.

3. Werkzeug nach Anspruch 1 oder 2, dadurch gekennzeichnet, dass der drehbare Verbindungsteil (130) bzw. die drehbaren Verbindungsteile eine Verzahnung aufweisen, welche in eine Zahnstange des Antriebs eingreifen.

4. Werkzeug nach der Anspruch 1 oder 2, dadurch gekennzeichnet, dass der drehbare Verbindungsteil (130) bzw. die drehbaren Verbindungsteile (130, 130') antriebsseitige Nocken (138, 138') aufweisen, die in Ausnehmungen (80, 80') einer bewegbaren Scheibe (8) der Antriebsvorrichtung eingreifen.

5. Werkzeug nach Anspruch 4, dadurch gekennzeichnet, dass die Nocken (138, 138') aller drehbaren Verbindungsteile (130, 130') in Ausnehmungen (80, 80') einer einzigen bewegbaren Steuerscheibe (8) eingreifen.

6. Werkzeug nach Anspruch 4 oder 5, dadurch gekennzeichnet, dass die Steuerscheibe (8) bzw. die Steuerscheiben der Antriebsvorrichtung linear verschiebbar ist bzw. sind.

7. Werkzeug nach Anspruch 5 oder 6, dadurch gekennzeichnet, dass die Steuerscheibe (8) bzw. die Steuerscheiben der Antriebsvorrichtung drehbar ist bzw. sind.

8. Werkzeug nach einem der Ansprüche 3 bis 7, dadurch gekennzeichnet, dass die Scheiben (8) bzw. die Zahnstange (15) der Antriebsvorrichtung mit mindestens einer Druckzugkabel-Vorrichtung (5, 51, 52, 55; 81, 81', 82) bewegbar sind.

9. Werkzeug nach einem der Ansprüche 1 bis 8, dadurch gekennzeichnet, dass die Verbindungsteile (130, 130') und/oder der Rohrkörper (40) Kanäle (133, 133', 134, 134', 139) zum Führen eines flüssigen oder gasförmigen Mediums aufweisen.

10. Werkzeug nach Anspruch 9, dadurch gekennzeichnet, dass die Kanäle für das Medium in den Spalt zwischen Rohrwand und Verbindungsteil (130, 130') münden und das Medium als Lagermittel zwischen Rohrinnenwand und Verbindungsteil dient.

11. Werkzeug nach Anspruch 9 oder 10, dadurch gekennzeichnet, dass die Kanäle (133, 133', 134, 134', 139) für das Medium als Kühlkanäle ausgelegt und ausgebildet sind.

12. Werkzeug nach einem der Ansprüche 1 bis 11, dadurch gekennzeichnet, dass die Verbindungsteile (130, 130') auswechselbar angeordnet sind.

13. Werkzeug nach einem der Ansprüche 1 bis 12, dadurch gekennzeichnet, dass die Verbindungsteile (130, 130') und der Rohrkörper auswechselbar sind.

14. Werkzeug nach einem der Ansprüche 1 bis 13, dadurch gekennzeichnet, dass es Kanäle zum Zu- und/oder Wegführen von gasförmigem oder flüssigem Medium aufweist.

15. Verwendung eines Werkzeugs nach einem der Ansprüche 1 bis 15 als Greifer für das Handhaben von Werkstücken in einem Hochtemperaturfeld.

16. Verwendung eines Werkzeugs nach einem der Ansprüche 1 bis 15 als Greifer in einem Reinraum.

**Claims**

1. A tool for robots, comprising a working device and a drive for the working device and at least one connecting member (130) disposed therebetween for the transmission of movement, force and power to the working device, said connecting member being disposed in a tubular member (40) for rotation about its longitudinal axis, characterised in that at least the one connecting member (130) approximately has the shape of a segment of the cylinder defined by the tubular member (40) and in that a bearing pin (7) is disposed on the axis of the tubular member (40), the connecting member (130, 130') being mounted for rotation about the axis of the tubular member (40) externally on the inner wall thereof and internally on the bearing pin (7).

2. A tool according to claim 1, characterised in that two rotatable connecting members (130, 130') are disposed in the tubular member (40) for rotation about the axis thereof.

3. A tool according to claim 1 or 2, characterised in that the rotatable connecting member (130) or the rotatable connecting members have a toothing which engages in a toothed rack of the drive.

4. A tool according to claim 1 or 2, characterised in that the rotatable connecting member (130) or rotatable connecting members (130, 130') have cams (138, 138') on the drive side, which engage in recesses (80, 80') of a movable disc (8) of the drive device.

5. A tool according to claim 4, characterised in that the cams (138, 138') of all the rotatable connecting members (130, 130') engage in recesses (80, 80') of a single movable control disc (8).

6. A tool according to claim 4 or 5, characterised in that the control disc (8) or control discs of the drive device is/are linearly displaceable.

7. A tool according to claim 5 or 6, characterised in that the control disc (8) or control discs of the drive device is/are rotatable.

8. A tool according to any one of claims 3 to 7, characterised in that the discs (8) and the toothed rack (15) of the drive device are movable by at least one push-pull cable mechanism (5, 51, 52, 55; 81, 81', 82).

9. A tool according to any one of claims 1 to 8, characterised in that the connecting members (130, 130') and/or the tubular member (40) have ducts (133, 133', 134, 134', 139) for the passage of a liquid or gaseous medium.

10. A tool according to claim 9, characterised in that the ducts for the medium lead into the gap between the tube wall and the connecting member (130, 130') and the medium serves as a bearing means between the tube inner wall and the connecting member.

11. A tool according to claim 9 or 10, characterised in that the ducts (133, 133', 134, 134', 139) for the medium are designed and constructed as cooling ducts.

12. A tool according to any one of claims 1 to 11, characterised in that the connecting members (130, 130') are arranged to be replaceable.

13. A tool according to any one of claims 1 to 12, characterised in that the connecting members (130, 130') and the tubular member are replaceable.

14. A tool according to any one of claims 1 to 13, characterised in that it has ducts for the supply and/or discharge of gaseous or liquid medium.

15. Use of a tool according to any one of claims 1 to 15 as a gripper for the manipulation of workpieces in a high-temperature field.

16. Use of a tool according to any one of claims 1 to 15 as a gripper in a clean room.

**Revendications**

1. Outil pour robot équipé d'un dispositif de travail et d'une commande de ce dispositif ainsi que d'au moins un élément de jonction (130), disposé entre ces derniers, qui est destiné à transmettre le mouvement, la force et l'énergie au dispositif de travail et qui est disposé dans un corps tubulaire (40) autour de l'axe longitudinal duquel il est rotatif, caractérisé en ce que ledit élément de jonction (130) a approximativement la forme d'un segment du cylindre délimité par le corps creux (40) et en ce qu'un axe de support (7) est disposé dans l'axe du corps tubulaire (40), l'élément de jonction (130, 130') étant supporté extérieurement sur la paroi interne du tube ainsi que, intérieurement, sur l'axe de support (7) en étant rotatif autour de l'axe du corps tubulaire (40).

2. Outil selon la revendication 1, caractérisé en ce que deux éléments rotatifs de jonction (130, 130') sont disposés dans le corps tubulaire (40) en étant rotatifs autour de l'axe de ce dernier.

3. Outil selon la revendication 1 ou 2, caractérisé en ce que l'élément rotatif de jonction (130) ou les éléments rotatifs de jonction comporte(nt) une denture qui engrène avec une crémaillère de la commande.

4. Outil selon la revendication 1 ou 2, caractérisé en ce que l'élément rotatif de jonction (130) ou les éléments rotatifs de jonction (130, 130') comporte(nt) du côté commande des broches (138, 138') qui pénètrent dans des évidements (80, 80') d'un plateau mobile (8) du dispositif de commande.

5. Outil selon la revendication 4, caractérisé en ce que les broches (138, 138') de tous les éléments rotatifs de jonction (130, 130') pénètrent dans des évidements (80, 80') d'un unique plateau mobile de commande (8).

6. Outil selon la revendication 4 ou 5, caractérisé en ce que le plateau de commande (8) ou les plateaux de commande du dispositif de commande est ou sont translatables linéairement.

7. Outil selon la revendication 5 ou 6, caractérisé en ce que le plateau de commande (8) ou les plateaux de commande du dispositif de commande est ou sont rotatifs.

8. Outil selon l'une des revendications 3 à 7, caractérisé en ce que les plateaux (8) et la crémaillère (15) du dispositif de commande sont déplaçables au moyen d'au moins un dispositif à câble de poussée et de traction (5, 51, 52, 55 ; 81, 81', 82).

9. Outil selon l'une des revendications 1 à 8, caractérisé en ce que les éléments de jonction (130, 130') et/ou le corps tubulaire (40) comportent des canaux (133, 133', 134, 134', 139) de conduction d'un fluide liquide ou gazeux.

10. Outil selon la revendication 9, caractérisé en ce que les canaux du fluide débouchent dans l'interstice compris entre la paroi du tube et l'élément de jonction (130, 130') et le fluide est utilisé en agent de support entre la paroi interne du tube et l'élément de jonction.

11. Outil selon la revendication 9 ou 10, caractérisé en ce que les canaux (133, 133', 134, 134', 139) destinés au fluide sont conçus et réalisés sous forme de canaux de refroidissement.

12. Outil selon l'une des revendications 1 à 11, caractérisé en ce que les éléments de jonction (130, 130') sont disposés de manière interchangeable.

13. Outil selon l'une des revendications 1 à 12, caractérisé en ce que les éléments de jonction (130, 130') et le corps tubulaire sont interchangeables.

14. Outil selon l'une des revendications 1 à 13, caractérisé en ce qu'il comporte des canaux d'admission et/ou d'évacuation d'un fluide gazeux ou liquide.

15. Utilisation d'un outil selon l'une des revendications 1 à 15 en grappin pour la manipulation de pièces dans une zone à température élevée.

16. Utilisation d'un outil selon l'une des revendications 1 à 15 en grappin à l'intérieur d'une salle blanche.

FIG. 2

FIG. 4

FIG. 1

FIG. 3